# EUROPÄISCHE PATENTANMELDUNG

(11) **EP 2 606 991 A1**
(43) Veröffentlichungstag der Anmeldung: **26.06.2013**
(21) Anmeldenummer: 12008295.3
(22) Anmeldetag: 12.12.2012
(51) Int. Cl.: B08B 9/34, B08B 9/28

(54) **Vorrichtung zum Ausblasen von Hohlkörpern aus Kunststoff**

(30) Priorität: 19.12.2011 CH 20042011
(71) Anmelder: M. Tanner AG, 8308 Illnau (CH)
(72) Erfinder: Tanner, Marcel, CH-8303 Bassersdorf (CH)
(74) Vertreter: Schaad, Balass, Menzl & Partner AG

(57) **Zusammenfassung**

Die Vorrichtung umfasst einen frei drehbaren Rotor (13), welcher am Umfang mit mehreren Düsenköpfen (14) ausgestattet ist. Der Rotor (13) ist über einer Reihe von Vorformlingen (1) angeordnet, wobei diese Vorformlinge (1) auf Ablaufschienen (7, 8) in Förderrichtung (9) bewegt werden. Mindestens einer der Düsenköpfe (14) taucht jeweils in den Hohlraum (11) eines Vorformlings (1) ein und wird von diesem in Förderrichtung (9) mitgenommen. Während des Eintauchens wird durch eine Düse (16) im Düsenkopf (14) ein Gasstrom in den Hohlraum (11) des Vorformlings (1) eingeblasen.

## Beschreibung

Die Erfindung betrifft eine Vorrichtung zum Ausblasen von Hohlkörpern, wie Vorformlinge für Kunststoffbehälter, in einer Fördereinrichtung, wobei die Hohlkörper an einem Ende offen und am anderen Ende verschlossen sind und am offenen Ende einen Kopf mit einem Kragen aufweisen, die Fördereinrichtung eine Transportstrecke mit in Förderrichtung geneigten Ablaufschienen aufweist, die Hohlkörper mit dem Kragen und mit nach oben gerichtetem offenem Ende, auf den Ablaufschienen aufliegen und in einer Reihe mit einem Achsabstand zueinander angeordnet sind und entlang der Transportstrecke gefördert werden sowie in einem Teilbereich der Transportstrecke eine Einrichtung zum Einblasen eines Gasstromes in den Hohlraum der Hohlkörper angeordnet ist.

Vorrichtungen zum Reinigen von Hohlkörpern, beispielsweise Flaschen oder Vorformlinge für Kunststoffflaschen, durch Ausspülen bzw. Ausblasen des Hohlraumes derartiger Hohlkörper mit Wasser und/oder einem Gasstrom, sind bei Produktionsanlagen für derartige Behälter bekannt. Aus US 6 173 827 ist eine Vorrichtung zum Reinigen des Hohlraumes von Vorformlingen aus Kunststoff für Kunststoffflaschen bekannt. Derartige Vorformlinge sind zumeist zylinderförmige Hohlkörper mit einem offenen und einem geschlossenen Ende, welche im Bereiche des offenen Endes einen Kragen aufweisen, welcher einen grösseren Durchmesser als der übrige Hohlkörper aufweist. Diese Vorformlinge werden in an sich bekannten Einrichtungen korrekt positioniert und in einer Reihe angeordnet. Diese Reihe von aneinander anschliessenden Vorformlingen wird in der beschriebenen Vorrichtung auf einer schrägen Rutsche mit Tragschienen, auch Ablaufschienen genannt, von einer Bearbeitungsstation zu einer nachfolgenden Bearbeitungsstation, z.B. einer Kunststoffblasmaschine, gefördert. Diese Ablaufschienen bilden dabei eine Transportstrecke einer Fördereinrichtung. In einem Teilbereich dieser Transportstrecke bzw. dieser schrägen Rutsche, in welcher die Vorformlinge mit ihren Kragen auf den Tragschienen aufliegen, ist eine Vorrichtung zum Reinigen der Vorformlinge angeordnet. In dieser Vorrichtung werden die Vorformlinge um 180° gewendet, so dass ihre Öffnung nach unten gerichtet ist und die Vorformlinge werden dabei weiterhin in Transportrichtung gefördert. Unterhalb der Vorformlinge und mit Abstand dazu sind mehrere Düsen angeordnet, über welche ionisiertes Gas in den Hohlraum der Vorformlinge eingeblasen wird. Durch das ionisierte Gas werden elektrostatische Aufladungen neutralisiert und allfällige Schmutzpartikel und Fremdkörper im Hohlraum der Vorformlinge können nach unten herausfallen. Anschliessend müssen die Vorformlinge wieder um 180° gewendet werden, so dass sie wieder in der korrekten Position, mit nach oben gerichteter Öffnung, an die Ablaufschienen übergeben werden können. Das Wenden der Vorformlinge gemäss dieser Lösung erfordert aufwendige Massnahmen sowie eine Zusatzeinrichtung, welche die Ablaufschienen unterbricht und das Transportieren ist bei den immer höher werdenden Fördergeschwindigkeiten und auch als Folge der leichter werdenden Vorformlinge sehr schwierig und teilweise nicht mehr möglich.

DE 101 40 906 A1 offenbart ein weiteres Verfahren und eine Vorrichtung zum Reinigen von hohlen Vorformlingen aus Kunststoff. Bei dieser Lösung werden die Vorformlinge durch einen Einlaufstern von einer Förderrinne übernommen und geordnet und vereinzelt. Anschliessend werden sie an ein Sternrad übergeben, in welchem sie mit ihrem Kragen vertikal hängend aufliegen, wobei das offene Ende nach oben gerichtet ist. Über einem Teilbereich des Sternrades ist eine Vorrichtung angeordnet, mit welcher eine Lanze in den Hohlraum des Vorformlings eingefahren werden kann, wobei diese Lanze am vorderen Ende eine Luftdüse aufweist. Über diese Lanze wird ionisierte Luft gegen das verschlossene Ende des Vorformlings geblasen, welche dann zwischen der Wandung des Vorformlings und der Lanze ausströmt und über dem offenen Ende des Vorformlings abgesaugt wird. Diese Lanze muss über einen bestimmten Zeitraum synchron mit dem Sternrad, bzw. den Vorformlingen in Förderrichtung mitlaufen und während dieser Zeit in die Vorformlinge eingefahren, gestoppt und wieder ausgefahren werden. Bei dieser Vorrichtung müssen die Vorformlinge nicht gewendet werden. Sie weist jedoch den Nachteil auf, dass die Förderrinne, und damit der Transportfluss, durch das Sternrad unterbrochen wird, was eine zusätzliche Störungsquelle bildet. Zudem ist der Aufbau des Sternrades und der zugehörigen Vorrichtung mit den ein-/ ausfahrbaren Lanzen sehr aufwendig und störungsanfällig und der Aufwand für die Mechanik und die Steuerung wird sehr gross.

Um Rohstoffe und Herstellkosten einzusparen wird versucht, Hohlkörper aus Kunststoff und damit auch die entsprechenden Vorformlinge dünnwandiger und leichter zu gestalten. Dies hat zur Folge, dass deren Handhabung in automatisierten Transportvorrichtungen immer schwieriger und störungsanfälliger wird. Es besteht deshalb der Wunsch, den Transportfluss der Hohlkörper, z.B. der Vorformlinge, für den Ausblasvorgang nicht zu unterbrechen und den Ausblasvorgang in die normale Förderbewegung der Vorformlinge zu integrieren.

Es ist deshalb Aufgabe der vorliegenden Erfindung, eine Vorrichtung der eingangs erwähnten Art zu schaffen, welche die oben genannten Nachteile behebt. Insbesondere soll die Erfindung gewährleisten, dass die Orientierung der Hohlkörper auf der Transportstrecke zum Ausblasen bzw. Reinigen nicht verändert werden muss, dass keine zusätzliche Positionierung der Hohlkörper notwendig ist und dass die Transportstrecke nicht unterbrochen werden muss. Hin- und hergehende Bewegungen von Teilen der Ausblasvorrichtung sollen vermieden werden. Die Vorrichtung soll als Zusatzelement an entsprechende Transportstrecken von Hohlkörpern, z.B. Ablaufschienen oder Rollenförderer, anbaubar sein.

Diese Aufgabe wird in Verbindung mit dem Oberbegriff des Patentanspruches 1 erfindungsgemäss dadurch gelöst, dass über den Ablaufschienen und mit Abstand zu diesen ein drehbarer Rotor mit mehreren, radial nach aussen gerichteten Düsenköpfen angeordnet ist, jeder Düsenkopf eine Gaszuführung und eine Düse aufweist, alle Düsen in einer gemeinsamen Ebene liegen, wobei diese Ebene etwa rechtwinklig zu den Auflageflächen der Auflageschienen steht und durch die Zentralachse der Hohlkörper verläuft und während der Förderung der Hohlkörper der Rotor in Förderrichtung rotiert und im Bereich zwischen Rotor und Ablaufschienen jeweils mindestens ein Düsenkopf mit dem Kopfbereich eines Hohlkörpers zusammenwirkt.

Mit dieser erfindungsgemässen Einrichtung wird es möglich, die Hohlkörper bzw. Vorformlinge während ihrer normalen Transportbewegung entlang der Transportstrecke und ohne Veränderung ihrer Position sowie ohne Unterbrechung der Ablaufschienen in der Transportstrecke durch Zusatzeinrichtungen mit einem Gasstrom, insbesondere Luftstrom, auszublasen und zu reinigen. Der Rotor mit den Düsenköpfen und den Düsen wird von den Hohlkörpern angetrieben und dreht sich synchron mit der Transportbewegung der Hohlkörper. Zusätzliche Steuereinrichtungen sind nicht notwendig und können entfallen. Es sind keine Teile vorhanden, welche Hin- und Herbewegungen ausführen müssen und damit treten auch keine gegeneinander gerichtete Beschleunigungs- und Verzögerungskräfte auf. Die gemeinsame Ebene, welche als Gedankenhilfe gedacht ist, in welcher die Düsen und damit auch die Radialachsen der Düsenköpfe liegen und in welcher auch die Zentralachsen der Hohlkörper liegen, gewährleistet ein optimales Zusammenwirken der Bewegungsabläufe der Hohlkörper und der Düsenköpfe am Rotor.

Erfindungsgemäss wird weiter vorgeschlagen, dass die Düsenköpfe mit den Düsen zueinander je einen gleichen Teilkreisabstand aufweisen und dieser Teilkreisabstand eine Funktion des in Förderrichtung zwischen benachbarten Hohlkörpern bestehenden Achsabstandes ist. Der Achsabstand zwischen den, in einer Reihe angeordneten, Hohlkörpern bzw. Vorformlingen ist abhängig von der Form dieser Körper, insbesondere deren Querschnittsabmessungen im Bereich der Ablaufschienen. Damit die Düsenköpfe störungsfrei mit den Hohlkörpern zusammenwirken, wird der Teilkreisabstand der Düsenköpfe so gewählt, dass im Bereiche zwischen dem Rotor und den Ablaufschienen und während der Transportbewegung der Hohlkörper jeweils immer ein Düsenkopf in einen Hohlkörper zusammenwirkt und ein benachbarter Düsenkopf mit dem direkt nachfolgenden Hohlkörper zusammenwirkt.

Eine vorteilhafte Ausbildung des Erfindungsgegenstandes sieht vor, dass im Bereiche einer Betriebsposition, in welcher eine Radialachse eines Düsenkopfes mit der Längsachse eines Hohlkörpers zusammenfällt, der Düsenkopf mindestens teilweise in den Hohlraum des Hohlkörpers eintaucht. Mit dieser Anordnung wird bewirkt, dass zwischen Düsenkopf und Hohlkörper eine sichere Wirkverbindung entsteht. Dadurch wird der Düsenkopf vom Hohlkörper, welcher sich in Transportrichtung fortbewegt, solange mitgenommen und damit der Rotor verdreht, bis der Düsenkopf aus dem Hohlraum des Hohlkörpers ausschwenkt.

Erfindungsgemäss wird weiter vorgeschlagen, dass jeder der Düsenköpfe aus einem Kugelabschnitt besteht, dessen Höhe mindestens so gross ist wie der Radius der Kugel, wobei der Kugelabschnitt zweiseitig und parallel sowie symmetrisch zu einer Zentralebene abgeflacht ist und zwei Seitenflächen aufweist. Da die meisten Hohlkörper, insbesondere Vorformlinge für Kunststoffbehälter, einen runden Querschnitt aufweisen, weist diese Ausgestaltung des Düsenkörpers besondere Vorteile auf. Einerseits wird der Düsenkörper, welcher in den Hohlraum des Hohlkörpers eingetaucht ist, in diesem Hohlraum sicher geführt. Dabei ist der Durchmesser, der ursprünglichen Kugel geringfügig kleiner als der Innendurchmesser des Hohlraumes der Hohlkörper, wodurch ein freier Zwischenraum entsteht. Anderseits ermöglicht der mittels der zwei Seitenflächen abgeflachte Kugelabschnitt gegenüber den Wandungen des Hohlraumes der Hohlkörper einen genügend grossen Durchlass, um das in den Hohlraum eingeblasene Gas bzw. die Luft nach aussen abströmen zu lassen. In weiterer vorteilhafter Ausgestaltung sind an einem Teilbereich des Kugelmantels des Kugelabschnittes Nuten ausgebildet, welche ebenfalls als Strömungskanäle für das Gas bzw. die Luft dienen. Es ist auch vorteilhaft, wenn die Eintauchtiefe des Düsenkopfes in den Hohlraum des Hohlkörpers mindestens so gross ist wie der Radius des Kugelabschnittes, aus welchem der Düsenkopf gebildet ist. Dadurch wird die optimale Führung des Düsenkopfes im Hohlraum des Hohlkörpers zusätzlich unterstützt. Die Düsenköpfe können aber auch eine andere Form aufweisen, beispielsweise die Form eines Kegelstumpfes.

Eine weitere zweckmässige Ausgestaltung des Erfindungsgegenstandes sieht vor, dass die Düsenköpfe über ein Verbindungselement mit dem Rotor verbunden sind und dieses Verbindungselement eine Längenverstellung aufweist. Durch die Veränderung der Länge des Verbindungselementes bzw. des radialen Abstandes der Düsen von der Achse des Rotors kann der Durchmesser des Teilkreises, auf welchem die Düsen liegen, vergrössert oder verkleinert werden. Dadurch kann auch der Teilkreisabstand zwischen benachbarten Düsenköpfen verändert und damit an den Achsabstand zwischen zwei benachbarten Hohlkörpern auf den Ablaufschienen angepasst werden. Dies ermöglicht in einem gewissen Massbereich die Anpassung des Rotors mit den Düsenköpfen an unterschiedliche Abmessungen der Hohlkörper bzw. Vorformlinge. Genügt für die Anpassung an die unterschiedlichen Abmessungen der Hohlkörper dieser Massbereich nicht, so kann der Rotor mit den Düsenköpfen ausgewechselt und durch einen Rotor mit anderen Abmessungen oder anderen Düsenköpfen ersetzt werden. Dies ist sehr einfach, da der Rotor auf einer feststehenden Rotorachse gelagert ist, welche an einem Strukturelement des Gehäuses der Vorrichtung verstellbarer befestigt ist.

Erfindungsgemäss wird weiter vorgeschlagen, dass der Rotor auf einer feststehenden Rotorachse gelagert ist und diese Rotorachse eine innere Gaszuführung aufweist, welche im Bereiche der gemeinsamen Düsenebene über eine Bohrung radial nach aussen in die Lagerbohrung des Rotors geführt ist, wobei die radial nach aussen gerichtete Bohrung gegen den Zwischenbereich zwischen Rotor und Ablaufschienen gerichtet ist. Diese Ausgestaltung ermöglicht wie bereits erwähnt den einfachen Austausch von Rotoren mit Düsenköpfen und den Einsatz von Rotoren mit unterschiedlichen Abmessungen. Gleichzeitig kann über die innere Gaszuführung mit der radial nach aussen gerichteten Bohrung derjenige Bereich bestimmt werden, in welchem einem oder mehreren Düsenköpfen Gas bzw. Druckluft zugeführt wird. In vorteilhafter Weise ist, am Austrittsende der radial nach aussen gerichteten Bohrung, am Mantel der Rotorachse eine erweiterte Öffnung ausgebildet, mit welcher der Zuströmbereich von Gas zur jeweiligen in Wirkverbindung stehenden Gaszuführung eines Düsenkopfes bestimmt ist. Durch entsprechende Ausgestaltung der erweiterten Öffnung kann beispielsweise bestimmt werden, dass dem Düsenkopf erst dann Gas bzw. Luft zugeführt wird, wenn er vollständig eingetaucht ist und die Luftzufuhr erst dann wieder unterbrochen wird, wenn der Düsenkopf wieder teilweise oder vollständig aus dem Hohlraum des Hohlkörpers ausgeschwenkt und der aus der Düse austretende Gasstrom die Förderbewegung der Hohlkörper in Förderrichtung zusätzlich unterstützt. Die Zuführung von Gas zur inneren Gaszuführung erfolgt in an sich bekannter Weise über einen Anschluss an eine externe Quelle von Druckgas, insbesondere Druckluft.

Eine vorteilhafte Ausbildung des Erfindungsgegenstandes sieht vor, dass äussere Gaszuführungen jedes Düsenkopfes durch die Verbindungselemente radial nach innen bis zur Lagerbohrung des Rotors geführt sind. Dies führt zu einer sehr einfachen und kostengünstigen Ausgestaltung der Vorrichtung, wobei die Gas- bzw. Luftzufuhr zu den Düsen über den gesamten Verstellbereich der Düsenköpfe gewährleistet ist.

Erfindungsgemäss wird weiter vorgeschlagen, dass ein Hilfsantrieb zur Unterstützung der Drehbewegung des Rotors vorhanden ist. Dabei kann es sich um einen an sich bekannten mechanischen, hydraulischen oder pneumatischen Hilfsantrieb handeln. Ein pneumatischer Hilfsantrieb könnte beispielsweise darin bestehen, dass radial gerichtete Elemente am Rotor von einem Luftstrom angeblasen werden. Im optimalen Fall erzeugt der Hilfsantrieb so viel Antriebskraft, dass die Reibungskräfte, welche auf dem Rotor wirken, überwunden werden können. Von den in Transportrichtung bewegten Hohlkörpern, in welche ein Düsenkörper eingetaucht ist, müssen dann nur minimale Mitnehmerkräfte für die Drehbewegung des Rotors erzeugt werden.

Zur Verbesserung des Reinigungseffektes ist es vorteilhaft, wenn in Förderrichtung der Hohlkörper gesehen, vor dem Rotor mit den Düsenköpfen eine zusätzliche Ausblasvorrichtung angeordnet ist, mit welcher ionisiertes Gas in den Hohlraum der Hohlkörper eingeblasen wird. Diese an sich bekannte Anordnung bewirkt, dass elektrische Ladungen im Hohlraum der Hohlkörper neutralisiert und Fremdkörper und Schmutzpartikel leichter ausgeblasen werden können.

Eine weitere zweckmässige Ausgestaltung des Erfindungsgegenstandes sieht vor, dass in Förderrichtung der Hohlkörper gesehen zwei oder mehrere Rotoren mit Düsenköpfen hintereinander angeordnet sind. Diese Anordnung kann vorteilhaft sein, wenn besonders hohe Anforderungen an die Reinigungswirkung des Ausblasvorganges gestellt werden. Sie ist aber auch vorteilhaft, wenn die Fördergeschwindigkeit der Hohlkörper bzw. Vorformlinge sehr hoch ist und die Zeitspanne, in welcher ein Düsenkopf jeweils in den Hohlraum eines Hohlkörper eingetaucht ist, nur noch gering ist. Durch die Anordnung von zwei oder mehreren Rotoren mit Düsenköpfen hintereinander kann der Reinigungsvorgang verbessert werden.

Der Rotor mit den Düsenköpfen und die Rotorachse mit der Gaszuführung bilden eine kompakte Baueinheit, welche über entsprechende Trägerelemente in einfacher Weise an der Trägerstruktur einer entsprechenden Fördereinrichtung mit einer Transportstrecke für Hohlkörper eingebaut werden kann. Zusätzlich kann aber auch der Rotor mit den Düsenköpfen in einfacher Weise ausgewechselt werden, so dass für Gruppen von unterschiedlich geformten Hohlkörpern Rotoren und Düsenköpfe mit unterschiedlicher geometrischer Gestaltung definiert und vorbereitet werden können. Dadurch kann die Vorrichtung in einfacher Weise angepasst werden, wenn die Fördereinrichtung auf Hohlkörper mit anderen Abmessungen umgestellt wird. Dadurch, dass die Düsenköpfe mindestens teilweise in den Hohlraum der Hohlkörper eintauchen, kann sichergestellt werden, dass der aus den Düsen austretende Gasstrom zentral bis zum geschlossenen Ende des Hohlraumes der Hohlkörper gelangt und nach der Umlenkung entlang der Seitenwände wieder nach oben aus dem Hohlraum ausströmen kann. Dies bewirkt einen sehr guten Reinigungseffekt, insbesondere wenn in einer Vorstufe die elektrischen Ladungen im Hohlraum des Hohlkörpers neutralisiert werden. Die Umlenkung des aus den Düsen austretenden Luftstromes, bevor er das geschlossene Ende des Hohlkörpers erreicht, wird zuverlässig vermieden. Der Reinigungseffekt wird auch dadurch verbessert, dass der Gasstrom, während des Eintauchens des Düsenkopfes in den Hohlraum, gegen die Wandung des Hohlraums im Vorformling gerichtet ist. Dadurch ergibt sich ein vorteilhafter Strömungsverlauf entlang einer Seite des Hohlraumes in den Hohlkörper hinein und entlang der gegenüberliegenden Seite des Hohlraumes aus dem Hohlkörper hinaus. Beim Ausfahren des Düsenkopfes aus dem Hohlraum entsteht der gleiche vorteilhafte Strömungsverlauf, jedoch in entgegengesetzter Richtung. Diese Wechsel der Strömungsrichtung des Gases im Hohlraum der Vorformlinge führen zu einer verbesserten Reinigungswirkung. Die erfindungsgemässe Vorrichtung ermöglicht einen Bewegungsablauf aller bewegten Teile, welcher synchron mit der Förderbewegung der Hohlkörper auf den Tragschienen erfolgt. Die Hohlkörper müssen weder gewendet noch muss ihr Bewegungsablauf in anderer Weise geändert werden. Auch muss die Förderstrecke für die erfindungsgemässe Vorrichtung nicht unterbrochen werden.

Im Folgenden wird die Erfindung anhand von Ausführungsbeispielen unter Bezugnahme auf die beiliegenden Zeichnungen näher erläutert. Es zeigen jeweils in schematischer Darstellung:
- Fig. 1: eine Seitenansicht eines erfindungsgemässen Rotors mit Düsenköpfen mit einem Ausschnitt aus den Ablaufschienen mit Vorformlingen,
- Fig. 2: einen Querschnitt durch die Einrichtung gemäss Fig. 1 entlang der Vertikalachse, und
- Fig. 3: eine perspektivische Ansicht eines erfindungsgemässen Rotors mit Düsenköpfen.

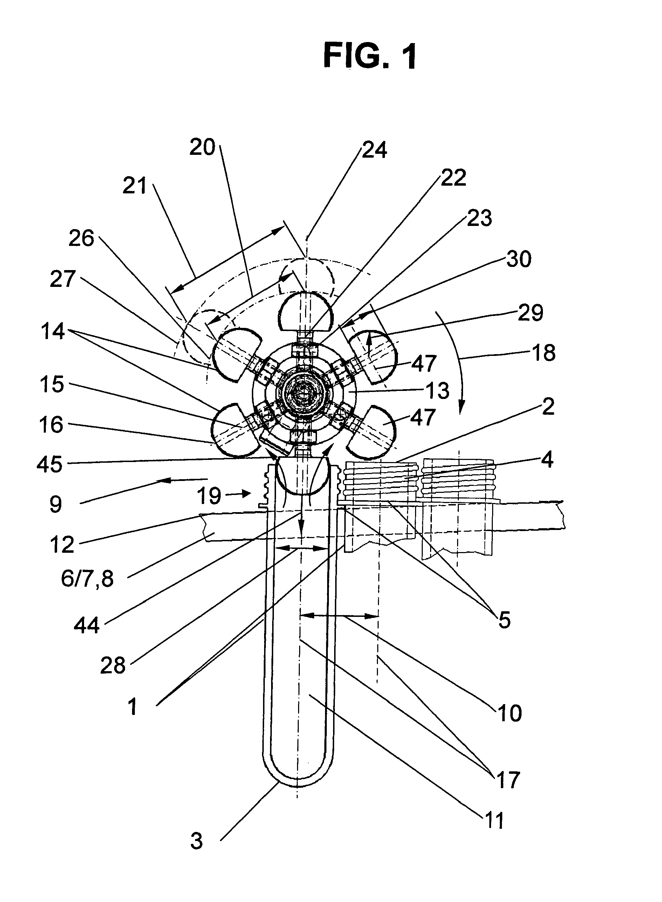

Fig. 1 zeigt einen Ausschnitt aus einer Fördereinrichtung mit einer Transportstrecke 6 für Vorformlinge 1 für Kunststoffbehälter und zwar in einem Bereich, wo die Vorformlinge 1 bereits richtig positioniert und in einer Reihe geordnet sind und auf Ablaufschienen 7, 8 gefördert werden. Die Ablaufschienen 7, 8 sind schräg, d.h. in Förderrichtung 9 geneigt angeordnet, wodurch die Vorformlinge 1 durch die Schwerkraft und den Staudruck der nachfolgenden Reihe von Vorformlingen 1 in der Förderrichtung 9 gefördert werden. Die Vorformlinge 1 sind längliche zylindrische Körper mit einem offenen Ende 2 und einem geschlossenen Ende 3 und weisen am offenen Ende 2 einen Kopf 4 mit Gewindeprofilen und mindestens einem Kragen 5 auf. Der Kragen 5 weist dabei einen grösseren Durchmesser auf als der zylindrische Teil des Vorformlings 1. Die Vorformlinge 1 weisen einen inneren Hohlraum 11 und eine Zentralachse 17 auf. Die Vorformlinge 1 liegen mit den Kragen 5 auf Auflageflächen 12 der Ablaufschienen 7, 8 auf und sind in einer Reihe angeordnet, wobei benachbarte Vorformlinge 1 jeweils einen gleichen Achsabstand 10 der Zentralachsen 17 zueinander aufweisen.

Über den Ablaufschienen 7, 8, und damit der in Förderrichtung 9 durchlaufenden Reihe von Vorformlingen 1, ist ein Rotor 13 mit radial nach aussen gerichteten Düsenköpfen 14 angeordnet. Im dargestellten Beispiel sind sechs Düsenköpfe 14 vorhanden. Die Anzahl der vorhandenen Düsenköpfe 14 kann auch kleiner oder grösser sein und ist von der Form und den geometrischen Abmessungen der Vorformlinge 1 sowie den geometrischen Abmessungen und der Position des Rotors 13 abhängig. Die Düsenköpfe 14 sind jeweils über ein Verbindungselement 22 mit dem Rotor 13 verbunden und sind mit einer Gaszuführung 15 und einer Düse 16 ausgestattet. Die Verbindungselemente 22 weisen eine Längenverstellung, im dargestellten Beispiel eine Gewindeanordnung 23, auf. Mit dieser Längenverstellung 23 kann der Abstand der Düsenköpfe 14 bzw. der Düsen 16 von der Rotationsachse 25 des Rotors 13 in Richtung der Radialachsen 24 in einem vorbestimmten Bereich verändert werden. Dies ermöglicht die Veränderung des Abstandes von benachbarten Düsen 16 zwischen einem minimalen Teilkreisabstand 20, auf einem inneren Teilkreis 26, und einem maximalen Teilkreisabstand 21, auf einem äusseren Teilkreis 27. Diese Verstellmöglichkeit ermöglicht die Anpassung der Vorrichtung an unterschiedliche Vorformlinge 1 und zwar über einen vorbestimmten Bereich von Abweichungen der Höhe des Kopfes 4 und/oder der geometrischen Ausgestaltung des Kragens 5. Die Düsenköpfe 14 sind dabei so ausgebildet, dass sie mit dem Kopfbereich 4 und dem Hohlraum 11 mit dem Innendurchmesser 28 zusammenwirken können. Dazu bestehen die Düsenköpfe 14 aus einem Kugelabschnitt mit einem Radius 29 und einer Höhe 30. Der Durchmesser der Düsenköpfe 14, welcher dem doppelten Radius 29 entspricht, ist etwas kleiner als der Durchmesser 28 des Hohlraumes 11 der Vorformlinge 1. Im dargestellten Beispiel beträgt der Durchmesser 28 des Hohlraumes 11 beispielsweise 22 mm und der Durchmesser bzw. doppelte Radius 29 der Düsenköpfe 14 ist um 0,2-0,3 mm kleiner. Prinzipiell sind Düsenköpfe für jegliche Durchmesservariante ausführbar. Die Düsenköpfe 14 können auch eine andere geeignete Form aufweisen, beispielsweise die Form eines Kegelstumpfes.

In der in Fig. 1 dargestellten Betriebsposition fällt die Radialachse 24 des nach unten gerichteten Düsenkopfes 14 mit der Längsachse bzw. Zentralachse 17 eines Vorformlings 1 zusammen. Dabei ist der Abstand des Düsenkopfes 14 von der Rotationsachse 25 des Rotors 13 so eingestellt, dass der Düsenkopf 14 im Bereiche 19 zwischen Rotor 13 und Ablaufschienen 7, 8 mindestens teilweise in den Hohlraum 11 des Vorformlings 1 eintaucht. Die Eintauchtiefe wird dabei so bestimmt, dass sich der grösste Durchmesser des Düsenkopfes 14 im Hohlraum 11 des Kopfes 4 befindet, d.h. die Eintauchtiefe ist mindestens so gross wie der Radius 29 des Kugelabschnittes, aus welchem der Düsenkopf 14 gebildet ist.

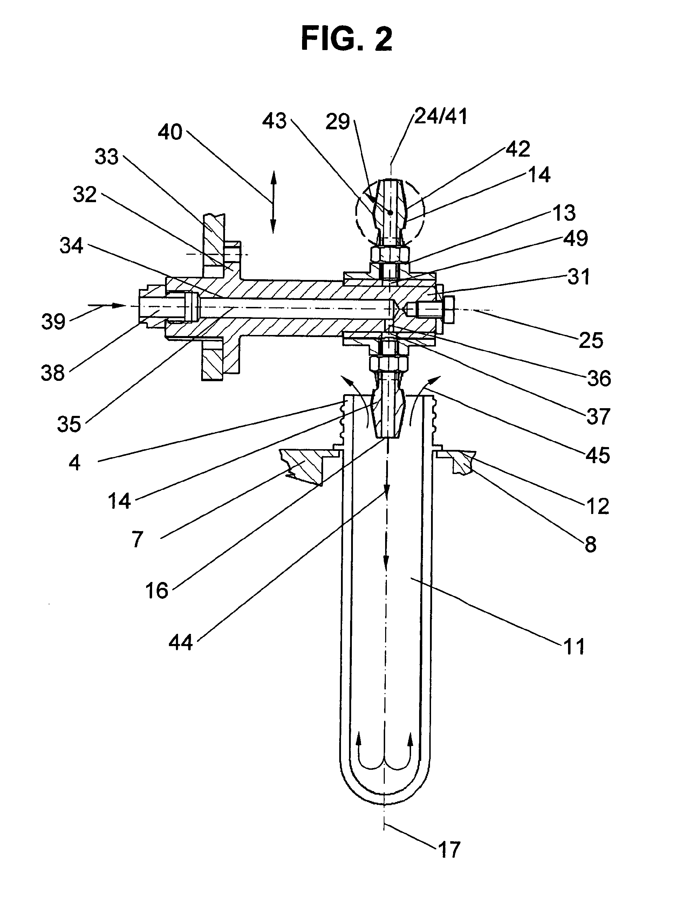

In Fig. 2 ist ein Querschnitt durch die Anordnung gemäss Fig. 1 entlang der Vertikalachse bzw. der zusammenfallenden Zentralachse 17 des Vorformlings 1 und der Radialachse 24 dargestellt und zeigt weitere Details der Vorrichtung. Der Rotor 13 ist auf einer feststehenden Rotorachse 31 gelagert, wobei diese Rotorachse 31 über einen Flansch 32 lösbar mit einem Strukturelement 33 des nicht dargestellten Gehäuses der Vorrichtung verbunden ist. Der Rotor 13 ist um die Rotationsachse 25 frei drehbar. Die Position, d.h. der Abstand der Rotationsachse 25 von den Auflageflächen 12 der Ablaufschienen 7, 8 ist einstellbar, indem der Flansch 32 gegenüber dem Strukturelement 33 in Richtung der Pfeile 40 verschiebbar ist. Die Rotorachse 31 weist eine innere Gasführung 34 auf, welche aus einer zentralen Bohrung 35, einer Radialbohrung 36 und einer erweiterten Öffnung 37 am Ende dieser radialen Bohrung 36 bzw. am Mantel der Rotorachse besteht. Diese erweiterte Öffnung 37 ist dabei gegen die Auflageflächen 12 der Ablaufschienen 7, 8 gerichtet und erstreckt sich über einen definierten Mantelbereich, welcher die Zufuhr von Gas zu den Düsenköpfen 14 auf einen bestimmten Bereich von Rotationswinkeln beschränkt. Die innere Gasführung 34 ist mit einer Gaszuführung 38, in diesem Fall für Druckluft verbunden. Die Druckluft wird dabei in Richtung des Pfeiles 39 zugeführt.

In dieser Fig. 2 ist beim nach oben gerichteten Düsenkopf 14 die Kugel angedeutet, welche die Basis für den Kugelabschnitt mit der Höhe 28 und dem Radius 29 bildet. Dabei ist auch ersichtlich, dass der Kugelabschnitt parallel sowie symmetrisch zu einer durch die Radialachse 24 gehenden Zentralebene 41 abgeflacht ist und dadurch zwei Seitenflächen 42, 43 ausgebildet sind. Beim nach unten gerichteten Düsenkopf 14, welcher in den Hohlraum 11 des Vorformlings 1 eintaucht, ist erkennbar, dass mit diesem Seitenflächen 42, 43 Durchlassöffnungen gebildet werden, durch welche das Gas bzw. die Luft, welche durch die Düse 16 in Richtung der Pfeile 44 zentral in den Hohlraum 11 eingeblasen wird, in Richtung der Pfeile 45 wieder ausströmen kann. Zusätzlich können am Mantel 46 des Kugelabschnittes, bzw. des Düsenkopfes 14, Nuten angeordnet sein, welche das Ausströmen von Luft in Richtung der Pfeile 45 auch in diesem Bereich ermöglichen.

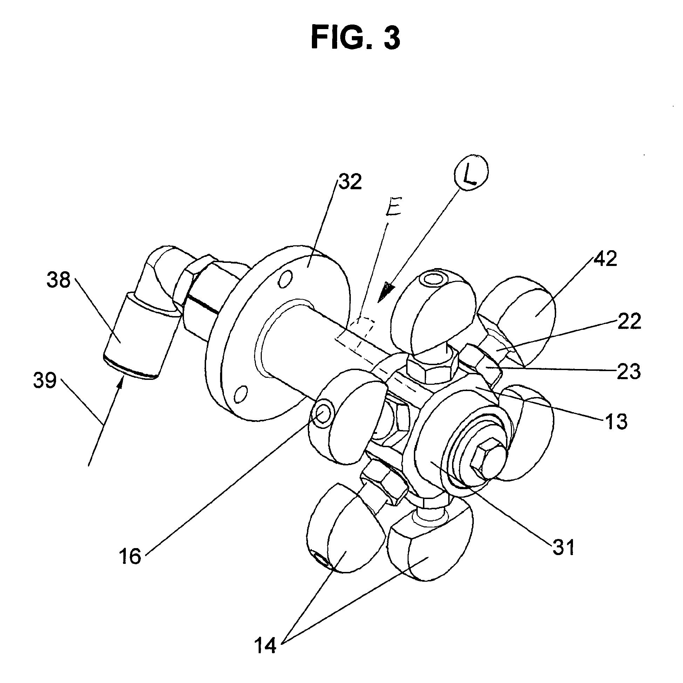

Fig. 3 zeigt die perspektivische Ansicht eines Rotors 13 mit den Düsenköpfen 14 sowie der Rotorachse 31 mit dem Druckluftanschluss 38, wobei die Ausgestaltung und Formgebung der Düsenköpfe 14 besser ersichtlich ist. An dem gegen den Flansch 32 gerichteten Teil des Rotors 13 kann auch ein Hilfsantrieb angeordnet sein, nämlich radial gerichtete Elemente E, welche von einem Luftstrom aus einer Luftdüse L beaufschlagt werden. Aus dieser perspektivischen Darstellung ist auch ersichtlich, dass die Baueinheit um den Rotor 13 mit den Düsenköpfen 14 eine Einheit bildet, welche leicht austauschbar ist. Es ist somit möglich, die erfindungsgemässe Ausblasvorrichtung in einfacher Weise an unterschiedlich geformte Vorformlinge 1 anzupassen, indem eine Baueinheit mit einem Rotor 13 mit anders geformten Düsenköpfen 14 und anderen geometrischen Abmessungen eingesetzt wird. Dies ist über die Flanschverbindung 32 und die entsprechenden Einstellmöglichkeiten in einfacher Weise möglich. Die beschriebene und dargestellte Form der Düsenköpfe 14 ist für Vorformlinge mit rundem Querschnitt besonders geeignet. Es ist aber auch möglich, eine andere geeignete Form, beispielsweise die Form eines Kegelstumpfes zu verwenden.

Beim Einsatz und Betrieb der erfindungsgemässen Vorrichtung werden zuerst die Düsenköpfe 14 am Rotor 13, mittels der längenverstellbaren Verbindungselemente 22, auf einen gewünschten Teilkreis und damit den für die korrekte Funktion notwendigen Teilkreisabstand zwischen den Massen 20 und 21 eingestellt. Dieser Teilkreisabstand wird dabei so festgelegt, dass bei der Drehbewegung des Rotors 13 in Richtung des Pfeiles 18 die, in einer Reihe mit dem Achsabstand 10 angeordneten, Vorformlinge 1 nicht aus ihrer Position ausgelenkt werden. Der Abstand des Rotors 13 von den Auflageflächen 12 der Ablaufschienen 7, 8 wird so festgelegt, dass die gewünschte Eintauchtiefe des Düsenkopfes 14 in den Hohlraum 11 des Vorformlings 1 erreicht wird und gleichzeitig der bei der Drehbewegung, nachfolgende Düsenkopf 14 kontinuierlich in den Hohlraum 11 des nachfolgenden Vorformlings 1 eintauchen kann. Auch der, in Förderrichtung 9 gesehen, vorlaufende Düsenkopf 14 soll dabei gleichzeitig wieder kontinuierlich aus dem Hohlraum 11 des vorlaufenden Vorformlings 1 ausgeschwenkt werden. Dieser Bewegungsablauf wird normalerweise allein durch die Vorschubkraft der der Vorformlinge 1, welche in Förderrichtung 9 bewegt werden, erzeugt und gesteuert. Er kann aber auch durch einen Hilfsantrieb unterstützt werden. Der Gasstrom, bzw. die Druckluft, welche zum Ausblasen der Schmutzpartikel und Fremdkörper aus dem Hohlraum 11 des Vorformlings 1 eingesetzt wird, wird den Düsenköpfen 14 bzw. den Düsen 16 nur in einem bestimmten Winkelbereich im Bereiche 19 zwischen dem Rotor 13 und den Ablaufschienen 7, 8 zugeführt. Dabei wird einem Düsenkopf 14, bzw. der entsprechenden Düse 16, beim Einschwenken in den Hohlraum 11 eines Vorformlings 1 erst dann Druckluft zugeführt, wenn auf den Vorformling 1 kein Staudruck entgegen der Förderrichtung 9 erzeugt wird. Anschliessend strömt über eine bestimmte Zeit und einen bestimmten Weg des Vorformlings 1 Druckluft aus der Düse 16, in Richtung des Pfeiles 44, zuerst entlang einer Wandung, dann zentral und dann entlang der gegenüberliegenden Wandung in den Hohlraum 11, bis sie am geschlossenen Ende 3 des Vorformlings 1 umgelenkt wird. Anschliessend strömt die Luft entlang der Wände des Hohlraumes 11 wieder nach oben und strömt in Richtung der Pfeile 45 durch die offenen Zwischenräumen zwischen dem eingetauchten Düsenkopf 14 und den Wänden des Hohlraumes 11 wieder aus. Die Zufuhr von Druckluft zur Düse 16 kann unterbrochen werden, sobald der Düsenkopf 14 beginnt, aus dem Hohlraum 11 auszuschwenken. Die Zufuhr kann aber auch noch weitergeführt werden, so dass der aus der Düse 16 austretende Luftstrom eine zusätzliche Förderkraft in der Förderrichtung 9 auf den Vorformling 1 ausübt. Der Winkelbereich, über welchen bei der Drehbewegung des Rotors 13 einem bestimmten Düsenkopf 14 im Bereiche 19 Druckluft zugeführt wird, wird durch die geometrischen Abmessungen der erweiterten Öffnung 37 an der Rotorachse 31 bestimmt. Diese ganze Anordnung ist sehr betriebssicher und nicht störungsanfällig, da zusätzliche Steuerelemente entfallen und auch die Zufuhr von Druckluft zum Ausblasen der Vorformlinge 1 allein durch die Bewegung der Vorformlinge 1, welche mit den Düsenköpfen 14 zusammenwirken, gesteuert wird.

## Patentansprüche

1. Vorrichtung zum Ausblasen von Hohlkörpern (1), wie Vorformlinge für Kunststoffbehälter, in einer Fördereinrichtung, wobei die Hohlkörper (1) an einem Ende (2) offen und am anderen Ende (3) verschlossen sind und am offenen Ende (2) einen Kopf (4) mit einem Kragen (5) aufweisen, die Fördereinrichtung eine Transportstrecke (6) mit in Förderrichtung (9) geneigten Ablaufschienen (7, 8) aufweist, die Hohlkörper (1) mit dem Kragen (5) und mit nach oben gerichtetem offenem Ende (2), auf den Ablaufschienen (7, 8) aufliegen und in einer Reihe mit einem Achsabstand (10) zueinander angeordnet sind und entlang der Transportstrecke gefördert werden sowie in einem Teilbereich der Transportstrecke (6) eine Einrichtung zum Einblasen eines Gasstromes in den Hohlraum (11) der Hohlkörper (1) angeordnet ist, **dadurch gekennzeichnet, dass** über den Ablaufschienen (7, 8) und mit Abstand zu diesen ein drehbarer Rotor (13) mit mehreren, radial nach aussen gerichteten Düsenköpfen (14) angeordnet ist, jeder Düsenkopf (14) eine Gaszuführung (15) und eine Düse (16) aufweist, alle Düsen (16) in einer gemeinsamen Ebene liegen, wobei diese Ebene etwa rechtwinklig zu den Auflageflächen (12) der Auflageschienen (7, 8) steht und durch die Zentralachse (17) der Hohlkörper (1) verläuft und während der Förderung der Hohlkörper (1) der Rotor (13) in Förderrichtung (12, 18) rotiert und im Bereich (19) zwischen Rotor (13) und Ablaufschienen (7, 8) jeweils mindestens ein Düsenkopf (14) mit dem Kopfbereich (4) eines Hohlkörpers (1) zusammenwirkt.

2. Vorrichtung nach Patentanspruch 1, **dadurch gekennzeichnet, dass** die Düsenköpfe (14) mit den Düsen (16) zueinander je einen gleichen Teilkreisabstand (20, 21) aufweisen und dieser Teilkreisabstand (20, 21) eine Funktion des in Förderrichtung (9) zwischen benachbarten Hohlkörpern (1) bestehenden Achsabstandes (10) ist.

3. Vorrichtung nach Patentanspruch 1 oder 2, **dadurch gekennzeichnet, dass** im Bereiche einer Betriebsposition in welcher eine Radialachse (24) eines Düsenkopfes (14) mit der Längsachse (17) eines Hohlkörpers (1) zusammenfällt, der Düsenkopf (14) mindestens teilweise in den Hohlraum (11) des Hohlkörpers (1) eintaucht.

4. Vorrichtung nach einem der Patentansprüche 1 bis 3, **dadurch gekennzeichnet, dass** jeder der Düsenköpfe (14) aus einem Kugelabschnitt besteht, dessen Höhe (30) mindestens so gross ist wie der Radius (29) der Kugel, wobei der Kugelabschnitt zweiseitig und parallel sowie symmetrisch zu einer Zentralebene (41) abgeflacht ist und zwei Seitenflächen (42, 43) aufweist.

5. Vorrichtung nach einem der Patentansprüche 1 bis 4, **dadurch gekennzeichnet, dass** die Düsenköpfe (14) über ein Verbindungselement (22) mit dem Rotor verbunden sind und dieses Verbindungselement (22) eine Längenverstellung (23) aufweist.

6. Vorrichtung nach einem der Patentansprüche 1 bis 5, **dadurch gekennzeichnet, dass** der Rotor (13) auf einer feststehenden Rotorachse (31) gelagert ist und diese Rotorachse (31) eine innere Gaszuführung (34) aufweist, welche im Bereiche der gemeinsamen Düsenebene über eine Bohrung (36) radial nach aussen in die Lagerbohrung (49) des Rotors (13) geführt ist, wobei die radial nach aussen gerichtete Bohrung (36) gegen den Zwischenbereich (19) zwischen Rotor (13) und Ablaufschienen (7, 8) gerichtet ist.

7. Vorrichtung nach einem der Patentansprüche 1 bis 6, **dadurch gekennzeichnet, dass** äussere Gaszuführungen(15) jedes Düsenkopfes (14) durch die Verbindungselemente (22) radial nach innen bis zur Lagerbohrung (49) des Rotors (13) geführt sind.

8. Vorrichtung nach einem der Patentansprüche 1 bis 7, **dadurch gekennzeichnet, dass** ein Hilfsantrieb zur Unterstützung der Drehbewegung des Rotors (13) vorhanden ist.

9. Vorrichtung nach einem der Patentansprüche 1 bis 8, **dadurch gekennzeichnet, dass** in Förderrichtung (9) der Hohlkörper (1) gesehen, vor dem Rotor (13) mit den Düsenköpfen (14) eine zusätzliche Ausblasvorrichtung angeordnet ist, mit welcher ionisiertes Gas in den Hohlraum (11) der Hohlkörper (1) eingeblasen wird.

10. Vorrichtung nach einem der Patentansprüche 1 bis 9, **dadurch gekennzeichnet, dass** in Förderrichtung (9) der Hohlkörper (1) gesehen, zwei oder mehrere Rotoren (13) mit Düsenköpfen (14) hintereinander angeordnet sind.

11. Vorrichtung nach Patentanspruch 4, **dadurch gekennzeichnet, dass** an einem Teilbereich des Kugelmantels des Kugelabschnittes bzw. des Düsenkopfes (14) Nuten ausgebildet sind.

12. Vorrichtung nach Patentanspruch 6, **dadurch gekennzeichnet, dass** am Austrittsende der radial nach aussen gerichteten Bohrung (36) am Mantel der Rotorachse (31) eine erweiterte Öffnung (37) ausgebildet ist, mit welcher der Zuströmbereich von Gas zur jeweiligen, in Wirkverbindung stehenden Gaszuführung (15) eines Düsenkopfes (14) bestimmt ist.

13. Vorrichtung nach Patentanspruch 4, **dadurch gekennzeichnet, dass** die Eintauchtiefe des Düsenkopfes (14) in den Hohlraum (11) des Hohlkörpers (1) mindestens so gross ist wie der Radius (29) des Kugelabschnittes, aus welchem der Düsenkopf (14) gebildet ist.

14. Vorrichtung nach Patentanspruch 1, **dadurch gekennzeichnet, dass** der Rotor (13) unmotorisiert ist.

15. Vorrichtung nach Patentanspruch 3, **dadurch gekennzeichnet, dass** auf diese Weise eine sichere Wirkverbindung zwischen dem Düsenkopf (14) und dem Hohlkörper (1) entsteht, wodurch der Düsenkopf (14) vom dem Hohlkörper (1), welcher sich in Transportrichtung fortbewegt, so lange mitgenommen und damit der Rotor (13) verdreht wird, bis der Düsenkopf (14) aus dem Hohlraum (11) des Hohlkörpers (14) ausschwenkt.

16. Vorrichtung nach Patentanspruch 8, **dadurch gekennzeichnet, dass** der Hilfsantrieb derart ausgestaltet ist, dass radial gerichtete Elemente (E) am Rotor (13) von einem Luftstrom aus einer Luftdüse (L) angeblasen werden.
